(19) Europäisches Patentamt
European Patent Office
Office européen des brevets

(11) Veröffentlichungsnummer : **0 044 270**
**B1**

(12) # EUROPÄISCHE PATENTSCHRIFT

(45) Veröffentlichungstag der Patentschrift : **25.07.84**

(51) Int. Cl.³ : **C 09 K 3/28**, C 09 D 5/18, A 62 D 1/00, B 27 K 3/00

(21) Anmeldenummer : **81810128.9**

(22) Anmeldetag : **30.03.81**

(54) **Feuerhemmende, intumeszierende Zusammensetzung und deren Verwendung zur Flammfestausrüstung von Substraten und als Feuerlöschmittel.**

(30) Priorität : **30.06.80 CH 5014/80**

(43) Veröffentlichungstag der Anmeldung : **20.01.82 Patentblatt 82/03**

(45) Bekanntmachung des Hinweises auf die Patenterteilung : **25.07.84 Patentblatt 84/30**

(84) Benannte Vertragsstaaten : **AT BE CH DE FR GB LI SE**

(56) Entgegenhaltungen :
**EP-A- 0 003 772**
**GB-A- 904 954**
**US-A- 3 925 137**
**US-A- 4 216 261**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
***Postfach***
**CH-4002 Basel (CH)**

(72) Erfinder : **Rohringer, Peter**
**Sechsjuchartenstrasse 1**
**CH-4124 Schönenbuch (CH)**
Erfinder : **Berini, René**
**Am Stausee 25/11**
**CH-4127 Birsfelden (CH)**

**EP 0 044 270 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schrifflich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

In GB-A 904 954 sind flammhemmende, unter Wärmeeinwirkung schaumschichtbildende Zusammensetzungen offenbart, die Mischungen aus organischen und anorganischen Substanzen wie z. B. Harnstoff, Dicyandiamid oder deren Kondensationsprodukte mit Formaldehyd, Phosphate, Karbonate und Borate, gegebenenfalls zusammen mit kleineren Mengen an Kohlenhydrate, wie z. B. Dextrin, enthalten und in wässrig-flüssiger Form streichbar sind. In GB-A 904 954 sind weder Hinweise über genauere Vertreter der organischen und anorganischen Substanzen als Komponenten der offenbarten Mischungen noch Mengenverhältnisse dieser Komponenten zu finden.

Im Gegensatz hierzu ist der Gegenstand der vorliegenden Erfindung eine feuerhemmende, intumeszierende, wässrige Zusammensetzung, die dadurch gekennzeichnet ist, dass sie

(a) 5 bis 20 Gewichtsprozent Ammoniumsulfat, Ammoniummonohydrogenphosphat oder Ammoniumdihydrogenphosphat,
(b) 15 bis 25 Gewichtsprozent Harnstoff oder methyloliertes Guanylharnstoffphosphat,
(c) 25 bis 35 Gewichtsprozent wasserlösliches Weiss- oder Gelbdextrin aus Maisstärke,
(d) 0,5 bis 2 Gewichtsprozent einer 25- bis 35-gewichtsprozentigen wässrigen Formaldehydlösung, sofern Harnstoff als Komponente (b) eingesetzt wird, oder
4 bis 6 Gewichtsprozent einer 25- bis 35-gewichtsprozentigen, wässrigen Formaldehydlösung, sofern Guanylharnstoffphosphat als Komponente (b) eingesetzt wird,
(e) 0 bis 1 Gewichtsprozent Natriumfluorid und
(f) 30 bis 40 Gewichtsprozent Wasser

enthält.

Weitere Gegenstände der vorliegenden Erfindung bilden die Verwendung der vorstehend bezeichneten Zusammensetzung zur hitzebeständigen und flammhemmenden Ausrüstung von Substraten aller Art oder als Feuerlöschmittel, ein Verfahren zum Flamm- und Hitzebeständigmachen von Substraten oder zum Löschen brennender Substrate, das dadurch gekennzeichnet ist, dass man die angegebene Zusammensetzung auf das Substrat aufbringt, sowie das nach diesem Verfahren flammfest ausgerüstete Substrat.

Bei der als Flammschutzmittel eingesetzten Komponente (a) sind Ammoniummonohydrogenphosphat $(NH_4)_2HPO_4$ und Ammoniumdihydrogenphosphat $NH_4H_2PO_4$ gegenüber Ammoniumsulfat bevorzugt.

Harnstoff oder Guanylharnstoffphosphat werden als Komponente (b) der Zusammensetzung eingesetzt und bilden sogenannte Blähmittel (blowing agents) dar, die durch Hitzeeinwirkung durch z. B. brennende Substrate mindestens Ammoniak und Kohlendioxyd abspalten. Harnstoff zersetzt bei Temperaturen von etwa 130 °C und Guanylharnstoffphosphat bei Temperaturen von etwa 160 °C unter Ausspaltung von Ammoniak, Kohlendioxyd, Wasser und gegebenenfalls Phosphorsäure. Guanylharnstoffphosphat wird auch 1-Carbamoylguanidin-, Dicyandiamidin- und 1-Ureidoguanidinphosphat genannt

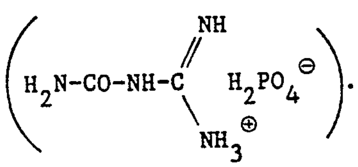

Als Komponente (c) der Zusammensetzung kommen grundsätzlich alle Dextrinarten in Betracht, die aus den entsprechenden Stärkearten thermisch zweckmässig in saurem Medium hydrolytisch abgebaut werden und welche mit Wasser von 20 bis 80 °C homogene, klare Lösungen oder Pseudolösungen ergeben. Vor allem kommen wasserlösliche, Weiss -und Gelbdextrine, die aus Tapioka-, vorzugsweise Kartoffel- und insbesondere Maisstärke abgebaut sind, in Frage. Die Mitverwendung der Komponente (c) bringt den Vorteil mit sich, das Flammschutzmittel, d. h. die Komponente (a) der Zusammensetzung an das Substrat stärker anzubinden und somit der unter Verwendung der Zusammensetzung erzielten Flammfestausrüstung eine bessere Spül-, Spritz- und Witterungsbeständigkeit zu verleihen. Somit stellt die in der Zusammensetzung eingesetzte Komponente (c) ein Bindemittel dar. Hierbei zeichnen sich Dextrine der vorstehend angegebenen Art durch ihre besonders gute Fixierwirkung aus, die beim Aufbringen der Zusammensetzung auf Substraten durch z. B. Anstreichen mit einem filmbildenden, nicht flüchtigen, transparenten, gut haftenden Anstrich auf dem Substrat zur Geltung kommt. Der Einsatz der angegebenen Dextrinarten als Komponente (c) bewirkt zudem eine gute Giessbarkeit der Zusammensetzung und verhindert die Bildung unerwünschter, als Depot schwer aufrührbaren Trübungen in der Zusammensetzung.

Durch die Kombination der Komponenten (a), (b), und (c) werden intumeszierende Zusammensetzungen (intumescent compositions) erhalten, die nach ihrer Applikation auf Substraten bei der Einwirkung von Flammen als dickflüssige, verschäumende, klebrige, unbrennbare, verkohlte Masse der

Ausbreitung von Flammen besonders wirksam entgegenstehen. Somit stellt die Komponente (c) nicht nur ein Bindemittel, sondern auch eine Kohlenstoffquelle dar.

Als Formaldehyd abgebendes Mittel für die Komponente (d) der erfindungsgemässen Zusammensetzung kommt z. B. Hexamethylentetramin, Trioxan und vor allem Paraformaldehyd in Betracht. Formaldehyd selbst, insbesondere als wässrige Formaldehydlösung, steht jedoch im Vordergrund des Interesses. Die Komponente (d) wird mitverwendet, um Guanylharnstoffphosphat als Komponente (b) besser zu lösen. Hierbei liegt die Komponente (d) entweder als Gemisch mit nicht methyloliertem Harnstoff als Komponente (b) in der Zusammensetzung vor oder wird vorgängig mit Guanylharnstoffphosphat als Komponente (b) bei erhöhter Temperatur, z. B. 80 bis 100 °C, zu methyloliertem Guanylharnstoffphosphat als Komponente (b) umgesetzt, das erst anschliessend der Zusammensetzung zugesetzt wird. Formaldehyd weist zudem als Komponente (d) eine fungizide und bakterizide Wirkung auf, die bei der allfälligen Lagerung der erfindungsgemässen Zusammensetzung und auch auf dem damit behandelten Substrat zur Geltung kommt.

Natriumfluorid als fakultative Komponente (e) der Zusammensetzung stellt ein Holzschutzmittel dar, sofern auch Holz als Substrat in Frage kommt. Dieses Holzschutzmittel widersetzt sich dem Zerfall von Holz durch Holzschädlinge, insbesondere Insekten, und durch Pilzbefall.

Die wässrigen erfindungsgemässen Zusammensetzungen enthalten die Komponenten (a), (b), (c), (d), und gegebenenfalls (e) in den vorstehend genannten Mengenverhältnissen, wobei sich die angegebenen Gewichtsprozente stets auf die Wirksubstanzen der Komponenten (a) bis (e) beziehen und die Summe aus den Komponenten (a) bis (f) jeweils 100 Gewichtsprozent ergeben muss.

Die erfindungsgemässen Zusammensetzungen sind nur schwach sauer und weisen im allgemeinen pH-Werte von 4 bis 6, insbesondere 5 bis 5,5 auf. Sie eignen sich deshalb besonders gut bei der Applikation auf gegen Säuren empfindliche Substrate, z. B. Holz. Im Falle von z. B. Bauholz als Substrat, tritt somit keine Holzbeschädigung und keine Verminderung der guten mechanischen Eigenschaften, wie etwa der Tragkraft, ein.

Die wässrigen, erfindungsgemässen Zusammensetzungen können nach bekannten Methoden erhalten werden, indem die Komponenten (a), (b), (c) und (d) und gegebenenfalls (e) in wässrigem Medium in beliebiger Reihenfolge vorzugsweise bei 10 bis 30 °C miteinander vermischt werden.

Im Verfahren zum Flammfestmachen bzw. Hitzebeständigmachen von Substraten, worin die erfindungsgemässe Zubereitung zur Flammfestausrüstung der Substrate verwendet wird, wird diese Zusammensetzung auf jede mögliche Weise, d. h. z. B. durch Eintauchen, Anstreichen, Besprühen oder Bespritzen auf das Substrat aufgebracht. Die Applikationsart hängt weitgehend vom Substrat ab. Im Verfahren zum Löschen brennender Substrate wird hingegen die erfindungsgemässe Zubereitung vorzugsweise in verschäumtem Zustand unter Zusatz eines oberflächenaktiven Verschäumungsmittels und gegebenenfalls eines Schaumstabilisators ausschliesslich durch Bespritzen aufgebracht.

Das Eintauchen beim Flammfestmachen von Substraten wird vor allem angewendet, wenn das Substrat in Stückform, z. B. als Holzbalken, bzw. -timber (Bauholz), oder Schindeln, Kunststoffflocken usw. vorliegt. Hierbei wird das Substrat durch Eintauchen, d. h. im sogenannten Tauchverfahren, in die Zusammensetzung, gegebenenfalls unter Rühren, Druck und/oder Vakuum und gegebenenfalls bei erhöhter Temperatur imprägniert und anschliessend getrocknet, wobei zweckmässig die erfindungsgemässe Zusammensetzung mit der 5- bis 20-fachen Menge Wasser zu einer Imprägnierflotte verdünnt wird.

Mit Vorteil kann das Substrat gegebenenfalls in entsprechenden Haltevorrichtungen in der Imprägnierflotte bewegt werden ; andererseits kann auch die Flotte umgewälzt werden, während das Substrat fixiert bleibt. Ferner verbleibt als dritte Möglichkeit, dass sowohl das Substrat als auch die Flotte bewegt wird.

In der Regel wird das Substrat mit der Imprägnierflotte vorzugsweise bei Raumtemperatur oder bei erhöhter Temperatur, z. B. 10 bis 100 °C, vorzugsweise 20 bis 50 °C, imprägniert. Im Eintauchverfahren kann das Holz zweckmässig unter Druck bis z. B. einem Ueberdruck von etwa 10 bar imprägniert werden. Man kann das Holz aber auch in geschlossenen Apparaturen üblicher Bauart im Eintauchverfahren unter Vakuum, z. B. bis zu einem Unterdruck von etwa − 0,1 bar, imprägnieren. In einer besonderen Ausführungsart des Verfahrens, das speziell für poröse Substrate wie Holz ausgerichtet ist, kann man das Substrat durch Eintauchen in die Zubereitung unter wechselweiser Anwendung von Vakuum (d. h. Unterdruck) und Druck (d. h. Ueberdruck) vorzugsweise bei etwa − 0,1 bis 10 bar imprägnieren.

Im Tauchverfahren werden in der Regel Flottenverhältnisse von 1 : 2 bis 1 : 10, vorzugsweise 1 : 5 bis 1 : 7, angewandt. Die Imprägnierungszeit hängt weitgehend von der Art und den Bedingungen der Imprägnierung und der Substratbeschaffung ab. Im Eintauchverfahren unter Normaldruck bei z. B. 20 bis 50 °C dauert die Imprägnierung je nach Art, Verarbeitungsstufe, Härte und Wasseraufnahmefähigkeit des eingesetzten Substrates z. B. 5 bis 60, vorzugsweise 15 bis 30 Minuten für z. B. Holzschindeln und z. B. 0,5 bis 24, vorzugsweise 1 bis 6 Stunden, für z. B. Holzbalken.

Nach erfolgter Imprägnierung wird das Substrat getrocknet, insbesondere bei etwa 15 bis 35 °C, z. B. durch Stehenlassen an der Luft während 6 bis 48 Stunden, vorzugsweise 12 bis 24 Stunden für z. B. Holzbalken oder vorzugsweise 10 bis 14 Stunden für z. B. Holzschindeln. Das Substrat kann aber auch mit Vorteil in einem Umlufttrockenofen üblicher Bauart bei Temperaturen von z. B. 15 bis 100 °C, vorzugsweise 40 bis 60 °C, getrocknet werden.

Das Aufbringen der erfindungsgemässen Zusammensetzung auf die Substrate kann vorzugsweise

auch z. B. durch Besprühen oder Bespritzen mit Sprüh- oder Spritzvorrichtungen herkömmlicher Bauart oder vorzugsweise durch Pinselstrich im allgemeinen bei Raumtemperatur erfolgen. Die Zusammensetzung wird im Gegensatz zum Tauchverfahren in der Regel in unverdünntem Zustand eingesetzt.

Anschliessend wird die Auflage in der Regel an der Luft, d. h. bei Raumtemperatur, getrocknet. Erforderlichenfalls werden mehrere Anstriche, z. B. 2 bis 7 Anstriche, übereinander aufgetragen, wobei zweckmässig eine Zwischentrocknung vorzugsweise bei Raumtemperatur zwischen jedem Streich- bzw. Sprüh- oder Spritzvorgang durchgeführt wird. Im allgemeinen wird pro Anstrich nach der Trocknung eine Flächenauflage von 100 bis 150 g Festsubstanz der erfindungsgemässen Zusammensetzung pro $m^2$ Substrat erzielt, wobei in filmbildender, transparenter, im Wasser wenig löslicher bis unlöslicher Anstrich erhalten wird. Die totale Flächenauflage wird dem eingesetzten Substrat angepasst. Auf Holzplatten ist z. B. eine Flächenauflage von 200 bis 700 $g/m^2$, die 2 bis 7 Anstriche erfordern, genügend, um eine intumeszierende Beschichtung (intumescent coating) zu erhalten, die sich ausgezeichnet dazu eignet, der Einwirkung und Verbreitung von Flammen wirksam entgegenzutreten.

Um die Wetterbeständigkeit, d. h. die Wasch- und Spülbeständigkeit der erhaltenen, angestrichenen Beschichtungen zu erhöhen, ist es möglich, die äusserste Schicht der Beschichtung mit einer handelsüblichen Lackschicht auf z. B. Polyacryl- oder Nitrocellulosebasis zu überziehen.

Als Verschäumungsmittel, das vorzugsweise den erfindungsgemässen Zusammensetzungen zugesetzt wird, falls diese Zusammensetzungen vorzugsweise im verschäumten Zustand als Löschmittel zum Löschen brennender Substrate verwendet werden, kommen praktisch alle handelsüblichen, sowohl ionogenen als auch nichtionogenen, oberflächenaktiven Mittel in Betracht, die beim Vermischen mit Luft, insbesondere Pressluft, stabile Schäume ergeben.

Bevorzugte Verschäumungsmittel sind Alkylarylsulfonsäuren mit 4 bis 18 Kohlenstoffatomen im Alkylteil, Alkylsulfonsäuren und Alkylsulfate mit 8 bis 24 Kohlenstoffatomen, gegebenenfalls mit Schwefel- und Phosphorsäuren veresterte Alkylenoxydaddukte mit 5 bis 100 Alkylenoxydeinheiten mit 2 bis 4 Kohlenstoffatomen pro Einheit von Fettalkoholen mit 8 bis 24 Kohlenstoffatomen oder Alkylphenolen mit 4 bis 12 Kohlenstoffatomen im Alkylrest oder deren Alkalimetall- oder Ammoniumsalze.

Der Fettalkohol kann gesättigt oder ungesättigt sein und er enthält 8 bis 24, vorzugsweise 12 bis 22 Kohlenstoffatome. Als Beispiele solcher Alkohole seinen Octanol, Decanol, ferner Lauryl-, Myristyl-, Cetyl-, Stearyl-, Arachyl-, Behenyl- oder Oleylalkohol sowie deren technische Gemische genannt. Als Alkylphenole kommen sowohl Monoalkylphenole als auch Dialkylphenole mit 4 bis 12, vorzugsweise 6 bis 12 Kohlenstoffatomen im Alkylrest in Betracht. Vorzugsweise werden äthoxylierte Alkylphenole oder Fettalkohole eingesetzt, wobei ein Aethoxylierungsgrad von 10 bis 100, insbesondere 10 bis 30 bevorzugt wird.

Bei den Alkylarylsulfonsäuren handelt es sich in der Regel um Monosulfonsäuren von mit Alkyl mit 4 bis 18 Kohlenstoffatomen substituiertem Naphthalin oder vor allem Benzol. Insbesondere Alkylphenylsulfonsäure mit 8 bis 12 Kohlenstoffatomen im Alkylrest werden bevorzugt. Alkylsulfonsäuren und Alkylsulfate enthalten in der Regel 8 bis 24 Kohlenstoffatome im Alkylrest, wie z. B. Natrium-Lauryl- oder Natrium-Stearylsulfonat oder vor allem Natrium-Lauryl- oder Natrium-Stearylsulfat, die im Vordergrund des Interesses stehen. Bei den gegebenenfalls mit Phosphorsäuren und insbesondere mit Schwefelsäure veresterten Fettalkohol- oder Alkyl-($C_4$-$C_{12}$)phenol-Aethylenoxydaddukten handelt es sich um Umsetzungsprodukte aus Fettalkoholen mit 8 bis 24, insbesondere 12 bis 22 Kohlenstoffatomen (wie angegeben) oder mit geradkettigen oder verzweigten Alkyl mit 4 bis 12 Kohlenstoffatomen (n-Butyl, n-Hexyl, n-Octyl, iso-Octyl, tert.-Octyl, n-nonyl, iso-Nonyl, tert.-Nonyl, n-Decyl oder n-Dodecyl) substituierten Phenolen und Aethylenoxyd (5 bis 100 Mol), die anschliessend gegebenfalls verestert und gegebenenfalls in die entsprechenden Alkalimetall- oder Ammoniumsalze überführt werden.

Weitere oberflächenaktive Mittel, die erfindungsgemäss ebenfalls als Verschäumungsmittel eingesetzt werden können, sind fluoraliphatische Tenside, wie sie z. B. in der US Patentschrift 4 090 967 beschrieben sind. Insbesondere weisen die AFFF-Tensidfeuerbekämpfungsmittel (AFFF = Aqueous Film Forming Foams), die ebenfalls in der US Patentschrift 4 090 967 beschrieben sind, eine gute Kompatibilität mit der wässrigen, erfindungsgemässen Zusammensetzung aus den Komponenten (a), (b), (c) und (d) und gegebenenfalls (e), auf.

Als fakultative Stabilisatoren, die gegebenenfalls zusammen mit dem Verschäumungsmittel eingesetzt werden, kommen z. B. Alkali-Ammonium- oder Aminsalze von Fettsäuren mit 8 bis 24 Kohlenstoffatomen und insbesondere Fettalkohole mit 8 bis 24 Kohlenstoffatomen oder Fettsäure-Alkanolamin-Umsetzungsprodukte aus Fettsäuren der angegebenen Art und Alkanolaminen mit 2 bis 6 Kohlenstoffatomen in Betracht. Bei den angegebenen Fettsäuresalzen handelt es sich in der Regel um Lithium-, Natrium-, Kalium-, Ammonium-, Monoäthanolamin-, Diäthanolamin-, Triäthanolamin- oder Isopropanolaminsalze von z. B. Capryl-, Caprin-, Laurin-, Myristin-, Palmitin-, Stearin-, Arachin-, Behen-, Ligocerin-, Olein-, Linol-, Linolen-, Arachidon- oder Kokosfettsäure, sowie deren technische Gemische. Amin- und Ammoniumsalze werden bevorzugt.

Als spezifische Vertreter von Fettalkoholen mit 8 bis 24, vorzugsweise 8 bis 18 Kohlenstoffatomen für Stabilisatoren, seien Lauryl-, Myristyl-, Stearyl-, Oleyl-, Arachidyl-, Behenyl- und insbesondere Cetylalkohol genannt.

Bei den Fettsäure-Alkanolamin-Umsetzungsprodukten handelt es sich um Produkte, welche aus Fettsäuren mit 8 bis 24, vorzugsweise 8 bis 18 Kohlenstoffatomen, wie schon vorher angegeben, und

Alkanolaminen mit 2 bis 6 Kohlenstoffatomen, wie Aethanolamin, Isopropanolamin oder Di-iso-propanolamin und insbesondere Diäthanolamin, erhalten werden.

Beispiele derartiger Umsetzungsprodukte als Stabilisatoren sind das Kokosfettsäurediäthanolamid sowie das Laurinsäure- oder Stearinsäurediäthanolamid.

Im allgemeinen werden den als Löschmittel verwendbaren, erfindungsgemässen Zusammensetzungen 2 bis 15 Prozent Verschäumungsmittel und 0 bis 8 Prozent Stabilisator, bezogen auf das Gesamtgewicht der Zusammensetzung, zugesetzt.

Im Verfahren zum Löschen brennender Substrate wird die erfindungsgemässe Zusammensetzung vorzugsweise mit 3 bis 6 Prozent eines Verschäumungsmittels der angegebenen Art und 30 bis 60 Prozent Wasser, bezogen auf das Gesamtgewicht der Zusammensetzung, versetzt, mit z. B. Pressluft verschäumt und in diesem verschäumten Zustand auf das brennende Substrat gespritzt. Das Verschäumen und Bespritzen mit Pressluft erfolgt zweckmässigerweise in einem Feuerlöscher üblicher Bauart, wobei Pressluft aus Druckluftzylindern (z. B. 2-4 bar) entnommen wird. Bei der angegebenen Menge Wasser ist der zusätzliche Einsatz eines Stabilisators neben der angegebenen Menge Verschäumungsmittel in der Regel nicht notwendig, um einen stabilen, voluminösen Schaum zu erhalten, der mindestens 3 Stunden stabil ist. Unter der Hitzeeinwirkung des brennenden Substrates verkohlt der Schaum zu einer kompakten Dämmschicht, welche die Flammen löscht und sich deren Weiterverbreitung wirksam entgegensetzt.

In einer anderen bevorzugten Ausführungsart des Verfahrens zum Löschen brennender Substrate wird die erfindungsgemässe Zusammensetzung mit 8 bis 12 Prozent eines Verschäumungsmittels der angegebenen Art und 4 bis 8 Prozent des Stabilisators der angegebenen Art versetzt, zusammen mit der 10- bis 50-fachen Menge Wasser unter Druck verdünnt und gleichzeitig verschäumt und in diesem verschäumten Zustand auf das brennende Substrat gespritzt. In diesem Fall erfolgt das gleichzeitige Verdünnen und Verschäumen zweckmässig in einer Wasserkanone mit inkorporiertem Schaumrohr üblicher Bauart. Je nach Beschaffenheit des Schaumrohres und Druck des in der Kanone verwendeten Wassers (z. B. 3 bis 6 bar) wird eine Luftzufuhr im Verhältnis von 1 : 10 (Schwerschaumrohr) bis 1 : 80 (Mittelschaumrohr) gewährleistet. Bei der angegebenen relativ hohen Verdünnung der erfindungsgemässen Zusammensetzung ist es vorteilhaft, neben der angegebenen Menge an Verschäumungsmittel die angegebene Menge an Stabilisator einzusetzen, um einen stabilen Schaum mit den vorstehend beschriebenen Eigenschaften zu erzielen.

Neben den bereits erwähnten Vorteilen sei die besonders gute und preisgünstige Zugänglichkeit und ausgezeichnete Lagerstabilität der erfindungsgemässen Zusammensetzungen erwähnt. Als weiterer Vorteil sei auch die universelle Verwendbarkeit der Zusammensetzungen auf Substraten aller Art genannt.

So kommen z. B. als brennende Substrate, die mit den erfindungsgemässen Zusammensetzungen gelöscht werden können, nicht nur brennbare, feste Gegenstände, wie z. B. Gebäude, Transportmittel oder Papier, sondern auch flüssige Substrate, wie z. B. brennbare Lösungsmittel, in Betracht.

Als Substrate, die mit den erfindungsgemässen Zusammensetzungen flammfest bzw. hitzestabil ausgerüstet werden können, kommen in erster Linie Baumaterialien in Betracht, z. B. solche aus Glas, Metall, Kunststoff oder Holz, die in den verschiedensten Verarbeitungsstufen vorliegen. So können erfindungsgemäss z. B. Glasscheiben, Metallplatten, Kunststoffolien, Holztimber als eigentliches Baumaterial oder Glaswolle. Kunststofflocken, Holzschindeln als Verkleidungs- oder Isoliermaterial flammhemmend ausgerüstet werden. Als flammfeste bzw. flammhemmende Eigenschaften im Sinne der voliegenden Erfindung wird auch die Stabilität gegen Hitzeeinwirkung verstanden. Dies ist insbesondere der Fall für an sich nicht brennbare Substrate wie Metall und Glas. Holz ist besonders geeignet, mit den erfindungsgemässen Zusammensetzungen behandelt zu werden. Es handelt sich hierbei um z. B. Späne, Balken oder Platten aller Holzarten, d. h. sowohl um Materialien aus weichem Nadelholz, wie z. B. Kiefer und Tanne, als auch aus hartem Laubholz, wie Eiche, Buche oder Eukalyptus. Bau- und Grubenholz aus Eukalyptus kann erfindungsgemäss besonders gut flammhemmend ausgerüstet werden.

Die in den nachfolgenden Beispielen angegebenen Prozente sind stets Gewichtsprozente.

## Beispiel 1

Eine wässrige, viskose, giessbare, klare Zusammensetzung, die 15 % Ammoniumdihydrogenphosphat, 20 % Harnstoff und 30 % reines Weissdextrin aus Maisstärke (als konzentrierte, wässrige Lösung) enthält, wird auf ein Brett aus Abachiholz aufgebracht, indem das Holz mit 3 Pinselanstrichen versehen wird, wobei nach jedem Anstrich eine Trocknung während 15 Minuten bei Raumtemperatur durchgeführt wird. Der so erhaltene Anstrich auf dem Holz ist transparent, nicht brüchig und weist eine gute Haftfestigkeit auf. Das flammfest ausgerüstete Brett kann mit der Flamme eines Bunsenbrenners nicht entflammt werden.

## Beispiel 2

Auf Abachiholzschindeln (Grösse : 115 × 20 × 3 mm) werden 1, 2 oder 3 Pinselanstriche einer wässrigen, viskosen, giessbaren, klaren Zusammensetzung aufgebracht, die 15 % Ammoniumdihydrogenphosphat, 20 % Harnstoff, 30 % Weissdextrin aus reiner Maisstärke (als wässrige, konzentrierte Lösung),

1 % einer 30 %igen, wässrigen Formaldehydlösung und 0,5 % Natriumfluorid enthält, wobei nach jedem Pinselanstrich eine Trocknung während 10 Minuten bei Raumtemperatur durchgeführt wird. Der auf den Holzschindeln erhaltene Anstrich ist transparent, nicht brüchig und weist eine gute Haftfestigkeit auf. Das so bestrichene Holz weist zudem gute bakterizide und fungizide Eigenschaften auf.

Die Flächenauflage und die Gewichtszunahme des bestrichenen Holzes wird gemessen. Die Ergebnisse dieser Messungen sind in der nachfolgenden Tabelle I angegeben. Die Flammschutzeffekte des Holzanstriches werden im Brennkasten gemäss DIN 53 906 und in einem Muffelofen beurteilt, wobei die Ergebnisse dieser Prüfungen ebenfalls in der nachfolgenden Tabelle I angegeben sind.

Zu diesem Zwecke werden die einzelnen Holzschindeln in einem Brennkasten in senkrechter Stellung mit einem Bunsenbrenner entflammt, wie dies für die Prüfung von Textilien im DIN-Test 53 906 durchgeführt wird, wobei im vorliegenden Fall die Zündzeit (Einwirkungsdauer der Brennerflamme) 12 Sekunden beträgt. Anschliessend wird der Verbrennungsrückstand in % des ursprünglichen Gewichts des angestrichenen Holzes bestimmt.

Im Muffelofen werden die Holzschindeln an einer Aufhängevorrichtung, d. h. ebenfalls in senkrechter Stellung, einer Hitzeeinwirkung von 325, 375 und 475 °C während jeweils 3 und 10 Minuten ausgesetzt. Anschliessend wird ebenfalls der Verbrennungsrückstand in % des ursprünglichen Gewichts des angestrichenen Holzes bestimmt.

Tabelle I

| | Behandelte Holzschindeln | | | unbehandelte Holzschindeln (zum Vergleich) |
|---|---|---|---|---|
| | mit 1 Pinselanstrich | mit 2 Pinselanstrichen | mit 3 Pinselanstrichen | |
| Flächenauflage ($g/m^2$) | 86 | 169 | 236 | 0 |
| Gewichtszunahme (%) | 19 | 38 | 53 | 0 |
| Verbrennungsrückstand im Brennkasten nach DIN 53906 (%) | 98 | 98 | 98 | 0 |
| Verbrennungsrückstand im Muffelofen (%) | | | | |
| nach 3 Minuten | | | | |
| bei 325°C | 72 | 75 | 70 | 54 |
| 375°C | 43 | 50 | 49 | 0 |
| 475°C | 31 | 33 | 34 | 0 |
| nach 10 Minuten | | | | |
| bei 325°C | 46 | 46 | 46 | 0 |
| 375°C | 39 | 39 | 41 | 0 |
| 475°C | 7 | 19 | 26 | 0 |

Beispiel 3

Man verfährt wie im Beispiel 2 angegeben, bringt jedoch auf die Abachiholzschindeln 1 oder 2

Pinselanstriche einer wässrigen, viskosen, giessbaren, klaren Zusammensetzung auf, die 10 % Ammoniummonohydrogenphosphat, 20 % Guanylharnstoffphosphat*, 30 % reines Weissdextrin aus Maisstärke (als wässrige, konzentrierte Lösung), 5 % einer 30 %igen, wässrigen Formaldehydlösung* und 0,5 % Natriumfluorid enthält.

Der auf den Holzschindeln erhaltene Anstrich ist wie im Beispiel 2 angegeben ebenfalls transparent, nicht brüchig und weist ebenfalls eine gute Haftfestigkeit auf. Das so bestrichene Holz weist zudem ebenfalls gute bakterizide und fungizide Eigenschaften auf.

In der nachfolgenden Tabelle II sind die Flächenauflagen und Gewichtszunahmen des bestrichenen Holzes und die aufgrund der Verbrennungsrückstände im Vertikaltest und im Muffelofen wie in Beispiel 2 bestimmten Flammschutzeffekte angegeben.

Tabelle II

| | Behandelte Holzschindeln | | unbehandelte Holzschindeln (zum Vergleich |
|---|---|---|---|
| | mit 1 Pinselanstrich | mit 2 Pinselanstrichen | |
| Flächenauflage ($g/m^2$) | 112 | 224 | 0 |
| Gewichtszunahme (%) | 25 | 50 | 0 |
| Verbrennungsrückstand im Brennkasten nach DIN 53906 (%) | 86 | 98 | 0 |
| Verbrennungsrückstand im Muffelofen (%) | | | |
| nach 3 Minuten | | | |
| bei 325°C | 71 | 81 | 54 |
| bei 375°C | 42 | 48 | 0 |
| bei 475°C | 32 | 27 | 0 |
| nach 10 Minuten | | | |
| bei 325°C | 51 | 49 | 0 |
| bei 375°C | 43 | 41 | 0 |
| bei 475°C | 28 | 25 | 0 |

Beispiel 4

Fastäfer aus Fichtenholz von 15 mm Dicke, Tischlerblätter aus Tannenholz von 11 mm Dicke, Pavatexplatten von 5 mm Dicke und Spanplatten von 13 mm Dicke (Gemisch aus Tannen, Buchen und Eichenholz), die jeweils eine Fläche von 1 m × 1,5 m aufweisen, werden mit der wässrigen, in Beispiel 3 angegebenen Zusammensetzung, beidseitig so angestrichen, dass man eine Auflage von jeweils 500 g Zubereitung pro $m^2$ Prüfling erhält.

Auf einem. Fassadenprüfstand im Freien werden die wie vorstehend angegebenen, behandelten Prüflinge und die zu Vergleichszwecken entsprechenden, unbehandelten Prüflinge einer Hitzeeinwirkung von 900 ± 100 °C ausgesetzt, wobei die Prüflinge in senkrechter Stellung gehalten werden und

* Die angegebenen Mengen an Guanylharnstoffphosphat und an Formaldehyd werden vorgängig, d. h. vor ihrer Zugabe in die wässrige Zusammensetzung zu einem methylolierten Guanylharnstoffphosphat bei 95 °C während 10 Minuten umgesetzt.

die Unterkante der Prüflinge in einem Abstand von 27 cm vom Boden steht. Die Hitze wird durch eine Batterie von 9 Propangasbrennern auf der einen Seite der Prüflinge erzeugt, die in einem Abstand von 50 cm von der Prüflingsfläche und in einem Abstand von 65 cm vom Boden steht. Die Temperaturen der Hitzebehandlung auf der Feuerseite und die erhaltenen Temperaturen auf der Rückseite, d. h. Kaltseite der Prüflinge, wird mit Thermoelementen gemessen. Bei allen behandelten Prüflingen bleibt bis zur vollen Entflammung die Kaltseitetemperatur als Mass der Wärmedämmung unter 150 °C. Hingegen kann bei den unbehandelten Prüflingen keine Wärmedämmung beobachtet werden, da die Prüflinge innerhalb von Sekunden, d. h. unmittelbar nach Beginn der Wärmeeinwirkung, sich bereits entflammen.

Das beobachtete Brennverhalten der einzelnen, unbehandelten und behandelten Prüflinge in Abhängigkeit der Dauer der Hitzeeinwirkung ist in der nachfolgenden Tabelle III angegeben.

Tabelle III

| Prüfling | Dauer der Hitzeeinwirkung | Brennverhalten |
|---|---|---|
| Fastäfer (Dicke 15 mm) | | |
| - unbehandelt | 30 Sek. | verbrennt vollständig |
| | 8 Min. | beflammter Teil vollständig abgebrannt |
| - behandelt mit Zusammensetzung gemäss Beispiel 3 | 8 Min. | kleine Brandherde |
| | 9 Min. | Selbstverlöschen nach Abstellen der Brenner |
| Tischlerblatt (Dicke 11mm) | | |
| - unbehandelt | 30 Sek. | Flammen |
| | 4 Min. | verbrennt vollständig |
| | 5 Min. | brennt weiter nach Abstellen der Brenner |
| - behandelt mit Zusammensetzung gem. Beispiel 3 | 9 Min. | kleine Brandherde; Flammen verlöschen nach Abstellen der Brenner |
| Pavatex® (Dicke 5 mm) | | |
| - unbehandelt | 1 Min. | verbrennt vollständig |
| | 1 1/2 Min. | brennt nach Abstellen der Brenner vollständig ab |
| - behandelt mit Zusammensetzung gem.Beispiel 3 | 7 1/2 Min. | kleine Brandherde |
| | 9 Min. | Selbstverlöschen nach Abstellen der Brenner |
| Spanplatte (Dicke 13 mm) | | |
| - unbehandelt | 50 Sek. | Flammen |
| | 6 1/2 Min. | brennt nach Abstellen der Brenner vollständig ab |
| - behandelt mit Zusammensetzung gem.Beispiel 3 | 9 Min. | brennt nicht, kann nicht entflammt werden |

Beispiel 5

Man verfährt wie in Beispiel 4 angegeben, setzt jedoch die in beispiel 4 angegebenen Spanplatten

ein, die mit der wässrigen, in Beispiel 2 angegebenen Zusammensetzung beidseitig so angestrichen werden, dass eine Auflage von 500 g Zubereitung/m² Prüfling entsteht.

Die Beurteilung der flammverzögernden Effekte im Vergleich mit unbehandelten Spanplatten erfolgt wie in Beispiel 4 beschrieben, wobei bei den behandelten Prüflingen eine Kaltseitetemperatur als Mass der Wärmedämmung von ebenfalls unter 150 °C gemessen wird.

Das beobachtete Brennverhalten der unbehandelten und behandelten Spanplatten in Abhängigkeit der Dauer der Hitzeeinwirkung ist in der nachfolgenden Tabelle IV angegeben.

Tabelle IV

| Prüfling | Dauer der Hitzeeinwirkung | Brennverhalten |
|---|---|---|
| Spanplatte (Dicke 13 mm) | | |
| - unbehandelt | 50 Sek. | Flammen |
| | 6 1/2 Min. | brennt nach Abstellen der Brenner vollständig ab |
| - behandelt mit Zusammensetzung gem. Beispiel 2 | 9 Min. | brennt nicht, kann nicht entflammt werden |

Beispiel 6

Eine viskose, klare, giessbare Zusammensetzung aus 15 % Ammoniumdihydrogenphosphat, 20 % Harnstoff, 30 % Weissdextrin aus reiner Maisstärke (als wässrige, konzentrierte Lösung), 1 % Formaldehyd (30 %ige, wässrige Lösung) und 34 % Wasser wird mit 10 % (bezogen auf das Gesamtgewicht der Zusammensetzung Natium-Laurylsulfat als Verschäumungsmittel und 6 % (bezogen auf das Gesamtgewicht der Zusammensetzung) eines Schaumstabilisatorgemisches aus Cetylalkohol und Kokosfettsäurediäthanolamid im Gewichtsverhältnis Alkohol : Amid von 1,5 : 1 versetzt.

Auf 4 Paletten (Tannenholz 12 m × 0,8 m × 0,15 m) wird im Freien eine Stahlwanne (2,5 m × 1,5 m × 0,5 m) gelegt. 50 Liter eines Lösungsmittelgemisches (Abfallösungsmittel) aus Aceton, Essigester, Aethanol und Toluol werden in der Wanne angezündet, wobei Flammen von 30 bis 50 cm Höhe entstehen. Aus einer Entfernung von zunächst 20 bis zuletzt 10 m wird nun die verschäumungsmittel- und stabilisatorhaltige Zusammensetzung mittels einer Wasserkanone mit Schwerschaumrohr, in welchem die Zusammensetzung mit der 50fachen Menge Wasser unter einem Druck von 5 bar und gleichzeitiger Luftzufuhr im Verhältnis von 1 : 15 verschäumt wird, auf den Brandherd gespritzt. Hierbei wird der Brandherd mit einem voluminösen Schaum überdeckt, der den Brand innerhalb 5 bis 10 Sekunden vollständig löscht. Gleichzeitig werden die Holzpaletten mit einer Schaumschicht überzogen, die während 3 Stunden stabil bleibt, d. h. nicht zusammenfällt.

Beispiel 7

Man verfährt wie in Beispiel 6 angegeben, vermischt jedoch die angegebene Zusammensetzung mit 4 % Laurylsulfat und 46 % Wasser und füllt die so verdünnte Zusammensetzung in einen 10 l Feuerlöscher ab.

Ein Balken aus Tannenholz (0,2 m × 0,3 m × 1,5 m) wird nun an einer Hängevorrichtung im Freien befestigt und am unteren Ende durch die Hitzeeinwirkung eines Propangasbrenners angezündet (900 bis 1 000 °C). Nach 2 Minuten brennt die untere Hälfte des Balkens mit hohen Flammen selbständig weiter.

Der brennende Balken wird aus dem Feuerlöscher mit der verschäumten, laurylsulfathaltigen Zusammensetzung mittels Pressluft aus einem Druckluftzylinder (3 bar) bespritzt, wobei das Feuer durch die entstehende Schaumschicht innerhalb von 2 bis 5 Sekunden vollständig gelöscht wird. Auf der Feuerstelle verkohlt der Schaum zu einer kompakten, flammhemmenden Dämmschicht, während auf den noch nicht verbrannten Stellen eine voluminöse, haftende, noch weisse Schaumschicht gebildet wird, die während 3 Stunden stabil bleibt, d. h. nicht zusammenfällt und dem Holz eine flammhemmende Ausrüstung verleiht, d. h. unter Einwirkung der Propangasbrenner während 2 Minuten bei 900 bis 1 000 °C, zu einer aufblähenden Dämmschicht verkohlt, welche nicht entzündet werden kann.

Aehnliche Ergebnisse werden erzielt, wenn man die Zusammensetzung mit 3 % AFFF-Mittel gemäss Beispiel 1 der US Patentschrift 4 090 967 (an Stelle von 4 % Natrium-Laurylsulfat) vermischt.

**Ansprüche**

1. Feuerhemmende, intumerzierende, wäßrige Zusammensetzung dadurch gekennzeichnet, dass sie

(a) 5 bis 20 Gewichtsprozent Ammoniumsulfat, Ammoniummonohydrogenphosphat oder Ammoniumdihydrogenphosphat,
(b) 15 bis 25 Gewichtsprozent Harnstoff oder methyloliertes Guanylharnstoffphosphat,
(c) 25 bis 35 Gewichtsprozent wasserlösliches Weiss- oder Gelbdextrin aus Maisstärke,
(d) 0,5 bis 2 Gewichtsprozent einer 25- bis 35-gewichtsprozentigen wässrigen Formaldehydlösung, sofern Harnstoff als Komponente (b) eingesetzt wird, oder
4 bis 6 Gewichtsprozent einer 25- bis 35-gewichtsprozentigen, wässrigen Formaldehydlösung, sofern Guanylharnstoffphosphat als Komponente (b) eingesetzt wird,
(e) 0 bis 1 Gewichtsprozent Natriumfluorid und
(f) 30 bis 40 Gewichtsprozent Wasser

enthält.

2. Zusammensetzung nach Anspruch 1, dadurch gekennzeichnet, dass sie einen pH-Wert von 4 bis 6 aufweist.

3. Verwendung der Zusammensetzung gemäss einem der Ansprüche 1 oder 2 zur hitzebeständigen und flammhemmenden Ausrüstung von Substraten oder als Feuerlöschmittel.

4. Verfahren zum Flammfest- und Hitzebeständigmachen von Substraten oder zum Löschen brennender Substrate, dadurch gekennzeichnet, dass man die intumeszierende Zusammensetzung gemäss einem der Ansprüche 1 oder 2 auf die Substrate aufbringt.

5. Verfahren zum Flammfestmachen von Substraten nach Anspruch 4, dadurch gekennzeichnet, dass man das Substrat durch Eintauchen in die gegebenenfalls mit Wasser verdünnte Zusammensetzung gegebenfalls unter Rühren, Druck und/oder Vakuum und gegebenenfalls bei erhöhter Temperatur imprägniert und anschliessend trocknet.

6. Verfahren zum Flammfestmachen von Substraten nach Anspruch 4, dadurch gekennzeichnet, dass man das Substrat mit mindestens einem Pinselanstrich versieht und trocknet.

7. Verfahren zum Löschen brennender Substrate nach Anspruch 4, dadurch gekennzeichnet, dass man die Zusammensetzung in Gegenwart mindestens eines oberflächenaktiven Verschäumungsmittels und gegebenenfalls mindestens eines Schaumstabilisators verschäumt und brennende Substrate mit der verschäumten Zubereitung bespritzt.

8. Verfahren nach Anspruch 7, dadurch gekennzeichnet, dass man die Zusammensetzung mit 3 bis 6 Prozent Verschäumungsmittel und 30 bis 60 Prozent Wasser, bezogen auf das Gesamtgewicht der Zusammensetzung, versetzt und mit Pressluft verschäumt, und das brennende Substrat mit der Zubereitung im verschäumten Zustand bespritzt.

9. Verfahren nach Anspruch 7, dadurch gekennzeichnet, dass man die Zusammensetzung mit 8 bis 12 Prozent Verschäumungsmittel und 4 bis 8 Prozent Stabilisator, bezogen auf das Gesamtgewicht der Zusammensetzung, versetzt, zusammen mit der 10- bis 50-fachen Menge Wasser unter Druck verdünnt und gleichzeitig verschaümt und das brennende Substrat mit der Zubereitung in verschäumtem Zustand bespritzt.

**Claims**

1. A fire-retardant, intumescent, aqueous composition, which comprises
(a) 5 to 20 per cent by weight of ammonium sulfate, ammonium monohydrogen phosphate or ammonium dihydrogen phosphate,
(b) 15 to 25 per cent by weight of urea or methylolated guanylurea phosphate,
(c) 25 to 35 per cent by weight of water-soluble white dextrin or yellow dextrin, obtained from corn starch,
(d) 0.5 to 2 per cent by weight of a 25 to 35 % aqueous formaldehyde solution, if urea is employed as component (b), or
4 to 6 per cent by weight of a 25 to 35 % aqueous formaldehyde solution, if guanylurea phosphate is employed as component (b),
(e) 0 to 1 per cent by weight of sodium fluoride, and
(f) 30 to 40 per cent by weight of water.

2. A composition according to claim 1, wherein the pH value is 4 to 6.

3. The use of a composition according to either of claims 1 or 2 for providing a substrate with a flame retardant and heat resistant finish or as fire extinguisher.

4. A process for providing a substrate with a flame retardant and heat resistant finish or for extinguishing a burning substrate, which comprises applying the intumescent composition according to either of claims 1 or 2 to said substrate.

5. A process for flameproofing a substrate according to claim 4, which comprises impregnating said substrate by immersing it in the composition, which may be diluted with water, optionally with stirring, under pressure and/or vacuum, and optionally at elevated temperature, and subsequently drying the impregnated substrate.

6. A process for flameproofing a substrate according to claim 4, wherein said substrate is provided with at least one brush coating and dried.

7. A process for extinguishing a burning substrate according to claim 4, wherein the composition is foamed in the presence of at least one surface active foaming agent and optionally at least one foam stabiliser, and spraying said burning substrate with the foamed composition.

8. A process according to claim 7, wherein the composition is mixed with 3 to 6 per cent of a foaming agent and 30 to 60 per cent of water, based on the total weight of the composition, and is foamed with compressed air, and the burning substrate is sprayed with the foamed composition.

9. A process according to claim 17, wherein the composition is mixed with 8 to 12 per cent of a foaming agent and 4 to 8 per cent of a stabiliser, based on the total weight of the composition and is diluted, and at the same time foamed, with a 10-fold to 50-fold amount of water under pressure, and the burning substrate is prayed with the foamed composition.

**Revendications**

1. Composition aqueuse intumescente retardatrice de flammes, caractérisée par le fait qu'elle contient :

(a) 5 à 20 pour cent en poids de sulfate d'ammonium de phosphate di-ammonique ou de phosphate mono-ammonique,
(b) 15 à 25 pour cent en poids d'urée ou de phosphate de guanylurée méthylolé,
(c) 25 à 35 pour cent en poids de dextrine blanche ou jaune de l'amidon de maïs, soluble dans l'eau,
(d) 0,5 à 2 pour cent en poids d'une solution aqueuse de formaldéhyde à 25-35 % en poids, dans la mesure où l'urée est utilisée comme constituant (b), ou
4 à 6 pour cent en poids d'une solution aqueuse de formaldéhyde à 25-35 % en poids dans la mesure où du phosphate de guanylurée est utilisé comme constituant (b),
(e) 0 à 1 pour cent en poids de fluorure de sodium et
(f) 30 à 40 pour cent en poids d'eau.

2. Composition selon la revendication 1, caractérisée par le fait qu'elle a un pH de 4 à 6.

3. Utilisation de la composition selon l'une des revendications 1 et 2, pour revêtir des substrats par un apprêt résistant à la chaleur et retardateur de flammes ou comme agent extincteur.

4. Procédé pour rendre ignifuges et résistant à la chaleur des substrats ou pour éteindre des substrats enflammés, caractérisé par le fait qu'on applique la composition intumescente sur le substrat, selon l'une des revendications 1 et 2.

5. Procédé pour rendre ignifuges des substrats selon la revendication 4, caractérisé par le fait qu'on imprègne le substrat par immersion dans la composition éventuellement diluée avec de l'eau, éventuellement par agitation, sous pression et/ou sous vide, et éventuellement à une température élevée puis qu'on sèche.

6. Procédé pour rendre ignifuges des substrats selon la revendication 4, caractérisé par le fait qu'on enduit le substrat à la brosse avec au moins une couche puis qu'on sèche.

7. Procédé pour éteindre des substrats enflammés selon la revendication 4, caractérisé par le fait qu'on fait mousser la composition en présence d'au moins un agent de moussage, tensio-actif et éventuellement d'au moins un stabilisant de mousse et qu'on pulvérise sur le substrat enflammé la préparation qui a moussé.

8. Procédé selon la revendication 7, caractérisé par le fait qu'on ajoute à la composition 3 à 6 pour cent d'agent de moussage et 30 à 60 pour cent d'eau, par rapport au poids total de la composition, puis qu'on la fait mousser avec de l'air comprimé et qu'on pulvérise sur le substrat enflammé la préparation à l'état de mousse.

9. Procédé selon la revendication 7, caractérisé par le fait qu'on ajoute à la composition 8 à 12 pour cent d'agent de moussage et 4 à 8 pour cent de stabilisant par rapport au poids total de la composition, qu'on la dilue simultanément sous pression avec de l'eau à raison de 10 à 50 fois sa quantité, et qu'on la fait mousser simultanément et que sur le substrat enflammé on pulvérise la préparation à l'état intumescent.